Europäisches Patentamt

European Patent Office

Office européen des brevets

(11) Veröffentlichungsnummer: **0 112 565**
**B1**

(12) EUROPÄISCHE PATENTSCHRIFT

(45) Veröffentlichungstag der Patentschrift: 28.09.88

(51) Int. Cl.⁴: **B 60 N 1/08**

(21) Anmeldenummer: 83113032.3

(22) Anmeldetag: 23.12.83

(54) Befestigungsvorrichtung für eine Bodenschiene einer Längsführung eines Fahrzeugsitzes an einer Bodengruppe eines Fahrzeugs.

(30) Priorität: 24.12.82 DE 3248056

(43) Veröffentlichungstag der Anmeldung:
04.07.84 Patentblatt 84/27

(45) Bekanntmachung des Hinweises auf die Patenterteilung:
28.09.88 Patentblatt 88/39

(84) Benannte Vertragsstaaten:
DE FR GB SE

(56) Entgegenhaltungen:
DE-B-1 958 631
FR-A- 519 865

(73) Patentinhaber: C. Rob. Hammerstein GmbH
Postfach 13 01 18 Merscheiderstrasse 167
D-5650 Solingen 13 (DE)
(73) Patentinhaber: BAYERISCHE MOTOREN WERKE
Aktiengesellschaft
Postfach 40 02 40
D-8000 München 40 (DE)

(72) Erfinder: Bauer, Heinz
Hammerstrasse 9
D-5650 Solingen (DE)
Erfinder: Frohnhaus, Ernst-Reiner
Hammerstrasse 13
D-5650 Solingen (DE)
Erfinder: Becker, Burckhard, Dipl.-Ing.
Obenkatternberg 25
D-5650 Solingen (DE)
Erfinder: Gedig, Alfred, Dipl.-Ing.
Hammerstrasse 28
D-5650 Solingen (DE)
Erfinder: Mellinghoff, Ulrich, Dipl.-Ing.
Sollachweg 7
D-8031 Wessling (DE)
Erfinder: Klemann, Dieter
Haxthausen 4
D-8050 Freising (DE)

Courier Press, Leamington Spa, England.

**0 112 565**

(74) Vertreter: **Bauer, Wulf, Dr.**
**Wolfgang-Müller-Strasse 12**
**D-5000 Köln 51 (Marienburg) (DE)**

(74) Vertreter: **Bauer, Wulf, Dr.**
**Wolfgang-Müller-Strasse 12**
**D-5000 Köln 51 (Marienburg) (DE)**

## Beschreibung

Die Erfindung bezieht sich auf eine Befestigungsvorrichtung für eine Bodenschiene einer Längsführung eines Fahrzeugsitzes an einer Bodengruppe eines Fahrzeugs, die eine Öffnung an der Bodenschiene aufweist, durch welche ein mit der Bodengruppe verbundenes, starres Spannelement greift, das die Bodenschiene fest gegen die Bodengruppe zieht.

Längsführungen für die Längsverschiebung von Fahrzeugsitzen bestehen bekanntlich aus zwei ineinandergreifenden und gegeneinander längsverschiebbaren Schienen, einer ortsfesten Bodenschiene und einer am Sitz befestigten Sitzschiene. Üblicherweise sind zwei derartige Längsführungen pro Fahrzeugsitz unterhalb der Seitenkanten des Fahrzeugsitzes vorgesehen. Die Befestigung der Bodenschiene erfolgt an einem im wesentlichen waagerecht verlaufenden Teil der Bodengruppe, zum Beispiel einer Konsole, oder seitlich an einem im wesentlichen senkrecht verlaufenden Teil der Bodengruppe, zum Beispiel der Seitenwandung eines Tunnels eines Kraftfahrzeugs. Dies schließt andere Befestigungsarten jedoch nicht aus.

Eine Befestigungsvorrichtung der eingangs genannten Art muß eine dauerhafte, wackelfreie und ausreißfeste Verbindung der vormontierten Längsführung mit der Bodengruppe des Fahrzeugs sicherstellen. Vorzugsweise muß die Ausreißfestigkeit so hoch sein, daß über die Längsführung und auf die Bodengruppe des Fahrzeugs Zugkräfte übertragen werden, wie sie bei Unfällen durch beschleunigte Passagiere in die Sicherheitsgurte eingeleitet werden. Weiterhin muß die Befestigungsvorrichtung eine präzise Montage der Längsführung ermöglichen, zugleich aber auch eine gewisse Montagetoleranz zulassen, da bei der Fertigung der Bodengruppe Abweichungen in den Abmessungen nie ganz zu vermeiden sind.

Üblicherweise sind zwei Befestigungsvorrichtungen pro Längführung vorgesehen, die jeweils an einem der beiden Endbereiche der Bodenschiene angreifen. Bei der aus der DE-A-19 58 631 ersichtlichen Befestigungsvorrichtung sind als Spannelement Gewindebolzen in der Bodenschiene befestigt. Die Gewindebolzen haben Köpfe, die an der von der Bodengruppe abgewandten Innenfläche der Bodenschiene anliegen. Der Gewindebereich der Gewindebolzen steht frei nach unten, zur Bodengruppe hin, vor. Die Gewindebolzen werden zur Befestigung der Längsführung durch eine Öffnung in der Bodengruppe oder eines Teils der Bodengruppe, zum Beispiel einer Konsole, gesteckt. Durch Aufschrauben einer Mutter wird über den Gewindebolzen die Bodenschiene der Längsführung gegen die Bodengruppe gezogen und dadurch festgehalten.

Nachteilig bei dieser bekannten Befestigungsvorrichtung ist der relativ hohe Zeitaufwand für die Befestigung, also für das Aufschrauben von Muttern auf die Gewindebolzen. Dieser Vorgang wird dadurch erschwert, daß für den Verschraubungsvorgang wenig Platz zur Verfügung steht, der Verschraubungsvorgang also unter räumlich sehr schwierigen Bedingungen erfolgen muß. Dies schließt den Einsatz maschineller oder automatischer Montagewerkzeuge häufig aus.

Aufgabe der Erfindung ist es, die Arbeitsvorgänge beim Befestigen einer Bodenschiene einer Längsführung an der Bodengruppe zu vereinfachen. Diese Aufgabe wird ausgehend von der bekannten Befestigungsvorrichtung dadurch gelöst, daß im Druchsteckbereich des Spannelements an der Bodenschiene mindestens ein gegen eine elastische Rückstellkraft verschwenkbarer Klemmkörper angeordnet ist und daß das Spannelement mit diesem Klemmkörper eine Klemmsperre bildet, wozu das Spannelement eine quer zu seiner Durchsteckrichtung vorspringende Nase aufweist, die eine vordere, beim Einstecken des Spannelements in die Öffnung der Bodenschiene den Klemmkörper seitlich wegdrückende Abweisflanke und eine dieser gegenüber zurückspringende Klemmflanke aufweist, an der der Klemmkörper bei befestigter Längsführung unter Einhaltung eines sehr spitzen Winkels (Reibungswinkel) anliegt.

Diese Befestigungsvorrichtung ermöglicht eine Befestigung der Bodenschiene durch Andrücken der Längsführung gegen die Bodengruppe, der Befestigungsvorgang wird dadurch zeitlich ausgesprochen verkürzt und vereinfacht. Es kann ein kompletter Fahrzeugsitz mit zwei daran befestigten Längsführungen durch Aufstecken komplett mit der Bodengruppe verbunden werden. Befestigungsarbeiten bei beschränktem Raum entfallen, die Befestigung erfolgt von oben und kann maschinell ausgeführt werden.

Erfindungsgemäß ist eine kinematische Umkehr ebenfalls möglich und gehört ausdrücklich zum Erfindungsgedanken. Hierbei ist das Spannelement mit der Bodenschiene verbunden, der Klemmkörper ist in einer entsprechenden Vorrichtung, zum Beispiel einer Tasche, der Bodengruppe angeordnet. Auch bei den weiteren, noch zu beschreibenden, vorteilhaften Weiterbildungen der Erfindung ist eine kinematische Umkehr möglich, hierauf wird teilweise einzeln im folgenden hingewiesen.

Erfindungsgemäß drückt der elastisch beaufschlagte Klemmkörper unter Einhalten des Reibungswinkels gegen die Klemmflanke des Spannelements, die sich an einer Verjüngungsstelle des Spannelements befindet. Unter Reibungswinkel wird derjenige Winkel verstanden, bei dem zwischen den Materialien des Klemmkörpers und der Klemmflanke Selbsthemmung auftritt, bei Stahl auf Stahl wird beispielsweise ein Winkel von 6 Grad in der Praxis verwendet. Wie bei der bekannten Befestigungsvorrichtung wird durch das Klemmgesperre die Bodenschiene zur Bodengruppe hin gezogen, wodurch der Formschluß zwischen Spannelement und der Öffnung in der Bodenschiene, durch die das Spannelement greift, aufrecht erhalten wird.

In vorteilhafter Ausführung der Erfindung ist pro Spannelement jeweils nur ein Klemmkörper vorgesehen. Es können auch pro Spannelement zwei Klemmkörper verwendet werden, zwischen denen sich das Spannelement bei befestigter Längsführung befindet. Hierzu hat das Spannelement zwei in Gegenrichtung zueinander vorspringende Nasen, insgesamt also eine pilzähnliche Form. Diese Ausführung gibt mehr Freiraum für den Befestigungsvorgang.

In vorteilhafter Ausführung der Erfindung hat das Spannelement eine frontseitige Anschlagfläche, der ein Anschlagbereich der Bodenschiene zugeordnet ist. Bei dieser Ausführung zieht das Spannelement die Bodenschiene nicht in unmittelbare Anlage an die Bodengruppe, wobei gegebenenfalls Distanzstücke zwischen Bodengruppe und Bodenschiene vorgesehen sein können, sondern zieht die Anschlagfläche gegen den Anschlagbereich. Dadurch bleibt zwischen der Außenseite der Bodenschiene und der zugewandten Fläche der Bodengruppe etwas Luft. Erreicht wird dadurch eine präzisere Positionierung der Klemmflanke zum Klemmkörper. Besonders vorteilhaft ist bei dieser Ausführung zudem, daß der Bereich des Spannelements zwischen Bodengruppe und Außenseite der Bodenschiene permanent deformiert werden kann, um Abmessungsabweichungen der Bodengruppe auszugleichen. Die Deformation des stegartigen Bereichs des Spannelements kann eine Torsion und/oder ein Parallelversatz sein. Ein derartiger Toleranzausgleich durch Deformation des Spannelements ist bei dem bekannten Spannelement nicht möglich, er wird dadurch erreicht, daß das Spannelement als Stanzteil ausgebildet wird.

Als Klemmkörper kann eine durch einen U-förmigen Schnitt aus der Bodenschiene geformte und herausgebogene Zunge verwendet werden, deren freies Ende an der Klemmflanke anliegt. In vorteilhafter Ausbildung der Erfindung wird jedoch vorgeschlagen, den Klemmkörper als separate Klemmbacke auszubilden. Die Klemmbacke ist dabei um eine an der Bodenschiene gehaltene Achse schwenkbar und wird durch eine Feder in Klemmrichtung beaufschlagt. Andere Ausführungen des Klemmkörpers sind möglich, entscheidend ist nur, daß der Klemmkörper beim Einschieben des Spannelements seitlich weggedrückt werden kann und sich anschließend, sobald er über die Nase gerutscht ist, selbsttätig elastisch an die Klemmflanke anlegt.

In einer besonders vorteilhaften Ausbildung der Erfindung ist nur an einem Endbereich und vorzugsweise am vorderen Endbereich der Bodenschiene eine Klemmgesperre vorgesehen, während die Befestigungsvorrichtung des anderen Endbereichs als Einhakeinrichtung ausgebildet ist. Bei dieser hat das Spannelement eine in der Verschieberichtung der Längsführung offene Einhakbucht. Weiterhin ist an der Bodenschiene ein starrer Körper, insbesondere ein Bolzen, angeordnet, der bei befestigter Längsführung von der Einhakbucht in Spannrichtung umgriffen wird. Diese Anordnung zweier unterschiedlicher Befestigungsvorrichtungen an derselben Längsführung ermöglicht eine besonders einfache Montage:

Bei schräggehaltener Schiene wird zunächst der Bolzen in die Einhakbucht eingeführt, anschließend wird die Längsführung um den Bolzen, der eine Achse bildet, nach unten geschwenkt und dabei die zweite Befestigungsvorrichtung, die als Klemmgesperre ausgebildet ist, geschlossen. Bei einem Fahrzeugsitz mit zwei Längsführungen sind die Einhakeinrichtungen gemeinsam entweder vorne oder aber hinten angeordnet. Die Befestigung eines kompletten, mit zwei Längsführungen versehenen Fahrzeugsitzes erfolgt dann besonders einfach durch Einführen der beiden Bolzen in die Einhakbuchten, anschließend wird der Sitz aus seiner Schräglage um die Bolzen in die Befestigungsebene geschwenkt, wobei die jeweiligen hinteren Klemmsperren selbsttätig einrasten. Eine einfache Demontage durch Lösen der Klemmsperre, beispielsweise mittels eines Schraubenziehers, für den ein Durchstecklloch in der Bodenschiene vorgesehen ist, ist möglich.

Die Anordnung einer Einhakeinrichtung und eines Klemmgesperres an einer Längsführung hat zusätzlich den weiteren, sehr entscheidenden Vorteil, daß eine bei der Herstellung der Bodengruppe aufgetretene Abweichung zwischen den beiden Spannelementen für die Befestigungsvorrichtung der Bodenschiene unbeachtlich ist. Der Bolzen kann innerhalb der Einhakbucht (die parallel zur Schienenlängsrichtung verläuft) beliebige Positionen einnehmen, entsprechend der Länge der Einhakbucht können also Längenabweichungen ausgeglichen werden.

Weitere Vorteile und Merkmale der Erfindung ergeben sich aus den übrigen Ansprüchen sowie der nun folgenden Beschreibung zweier lediglich beispielhaft zu verstehender Ausführungsbeispiele, die unter Bezugnahme auf die Zeichnung näher erläutert werden.

Diese zeigt in:

Fig. 1 eine (teilweise schnittbildliche) Seitenansicht einer Längsführung mit zwei unterschiedlichen Befestigungsvorrichtungen, und

Fig. 2 eine Darstellung entsprechend Fig.1 eines zweiten Ausführungsbeispiels.

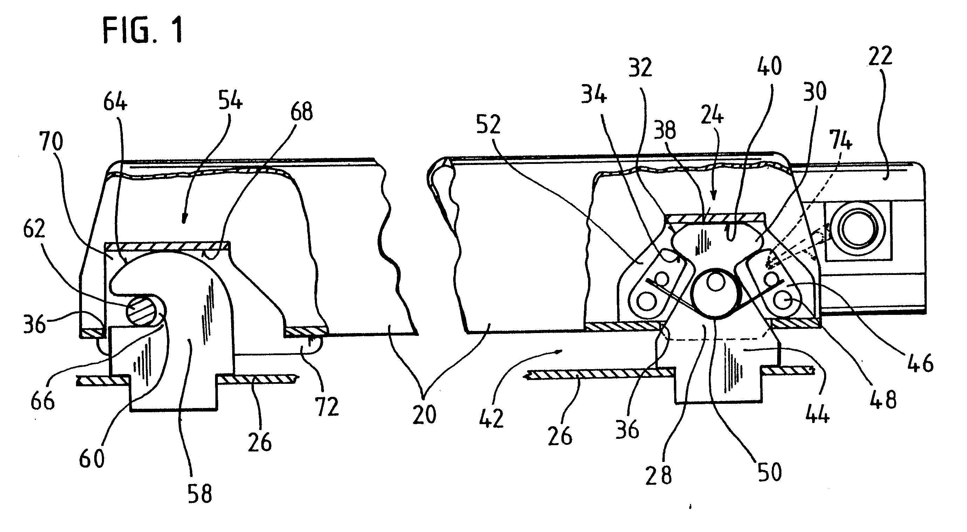

In der Fig. 1 ist eine Längsführung mit einer Bodenschiene 20 und einer Sitzschiene 22 gezeigt, letztere ragt am rechten, hinteren Ende gegenüber der Bodenschiene 20 vor. Die Bodenschiene 20 umgreift die Sitzschiene 22. Andere Ausbildungen, solange ausreichend Platz für die noch zu besprechenden Befestigungsvorrichtungen bleibt, sind ausdrücklich möglich.

Zunächst wird die hintere, als ein Klemmgesperre 24 ausgebildete Befestigungsvorrichtung erläutert:

Bei ihr ist mit einem gezeigten Teilstück der Bodengruppe 26 fest ein starres, als Stanzteil hergestelltes, etwa pilzförmiges Spannelement 28 verbunden. Es hat zwei gegenständige, in Schienenlängsrichtung, also quer zur Einsteckrichtung vorspringende Nasen 30. Diese haben jeweils eine Abweisflanke 32 und eine Klemmflanke 34, letztere befindet sich in einem Verjüngungsbereich des Spannelements 28 und verläuft grob gesehen etwa in Schienenlängsrichtung. Das Spannelement 28 erweitert sich keilförmig zur Bodengruppe 26 hin, in diesem Bereich befindet sich eine dem Spannelement 28 angepaßte Öffnung 36. Auf Grund der Keilform liegt das Spannelement 28 bündig an der Öffnung 26 an, kann jedoch in Längsrichtung etwas bewegt werden.

In Längsrichtung wird das Spannelement 28 durch Anschläge 38, 40 gegenüber der Bodenschiene 20 fixiert. Hierzu ist das vordere, abgeflachte Ende des Spannelements 28 als Anschlagfläche eingesetzt, die, wie die Figur zeigt, in Anlage an einem Anschlagbereich 40 der Bodenschiene steht. Beide Anschläge 38, 40 verlaufen parallel zur Verschieberichtung. Durch sie wird erreicht, daß sich die Bodenschiene 20 nicht in direktem Kontakt mit der Bodengruppe 26 befindet vielmehr quasi "auf Stelzen" steht. Zwischen Bodenschiene 20 und Bodengruppe 26 bleibt ein Freiraum 42, der beispielsweise einen ringförmigen Umgriff um die Bodenschiene 20 eines Zugelements für ein Gurtschloß ermöglicht. Von besonderem Vorteil ist, daß der stegartige Bereich 44 zum Ausgleich von Abmessungsabweichungen in der Bodengruppe tordiert, geneigt und/oder mit einem Parallelversatz versehen werden kann. Diese Deformation erfolgt nach Befestigung der Längsführung an der Bodengruppe, kann allerdings auch zuvor erfolgen, wenn zunächst eine Lehre aufgesetzt wird, die die Spannelemente 28 richtet und erst anschließend die Längsführung befestigt wird.

An den beiden Klemmflanken 34 des Spannelements 28 liegen jeweils als Klemmbacken 46 ausgebildete Klemmkörper an. Sie sind über Achsen 48 an der Bodenschiene 20 angelenkt und durch eine gemeinsame Feder 50, die als Schenkelfeder ausgebildet ist, miteinander verbunden. Die Feder zieht die beiden Klemmbacken 46 aufeinander zu. Der Anschwenkkreis der Klemmflächen der Klemmbacken 46 schneidet die Klemmflanke 34, dabei wird ein Winkel von sechs Grad (Reibungswinkel ausgebildet.

Wie aus der Figur ersichtlich ist, sind die Achsen 48 an einem Haltewinkel 52 befestigt, der fest mit der Innenseite der Bodenschiene 20 verbunden ist, sich innerhalb dieser befindet und mit seinem oberen, kurzen Schenkel innenseitig zugleich den Anschlagbereich 40 bildet. Dadurch ist es möglich, die Bodenschiene 20 nach einem üblichen Herstellungsverfahren, zum Beispiel Abwinkeln oder Drücken, herzustellen und nachträglich die benötigten Teile für die Befestigungsvorrichtung einzubauen. Der kurze Schenkel des Haltewinkels 52 ist entweder mit einer Seitenwand der Bodenschiene 20 verbunden oder geht in einen Schenkel über, wodurch der Haltewinkel 52 in Längsrichtung gesehen U-Form bekommt.

Anstelle der gezeigten Ausbildung des Klemmgesperres 24 kann eine Klemmbacke 46 entfallen und durch einen ortsfesten Anschlag ersetzt werden, an dem die entsprechende Nase 30 anschlägt. Letztere Ausführung ist hier jedoch nur als beispielhafte Erläuterung zu verstehen, insbesondere ist keine Nase für den Anschlag notwendig. Entscheidend ist nur eine in Einsteckrichtung des Spannelements 28 verlaufende Anschlagfläche am Spannelement 28 und an der Bodenschiene 20.

Im folgenden wird die Befestigungsvorrichtung des vorderen Endbereichs der Bodenschiene 20 erläutert, diese ist als eine Einhakeinrichtung 54 ausgebildet. Hierzu ist das Spannelement, im folgenden zweites Spannelement 58 genannt, mit einer in Längsrichtung der Schienen 20,22 verlaufenden und nach vorn offenen Einhakbucht 60 versehen. Es greift wiederum durch eine Öffnung 36 in der Bodenschiene 20, diese Öffnung 36 läßt jedoch einen gewissen Freiraum in Längsrichtung für das zweite Spannelement 58, legt es aber seitlich fest. Demgemäß hat das zweite Spannelement 58 auch keinen Keilbereich wie das erste Spannelement 28. An der Bodenschiene 20 ist als starrer Körper ein Bolzen 62 angeordnet, der bei befestigter Längsführung oben und unten an der Einhakbucht 60 anliegt. Wie deutlich aus der Figur zu ersehen ist, liegt der Bolzen 62 nicht am Ende der Bucht an. In Längsrichtung der Schiene gibt die Einhakeinrichtung 54 einen gewissen Freiraum, die Positionierung in Längsrichtung wird durch das Klemmgesperre 24 bewirkt. Hierdurch können Längenabweichungen, wie beschrieben, ausgeglichen werden.

Eine vordere Kante des zweiten Spannelements 58 ist als Klemmflanke 64 ausgebildet, diese verläuft auf einem Kreisbogen um ein Zentrum 66. Der Mittelpunkt des Bolzens 62 ist hier gegenüber in Schienenlängsrichtung und zur Öffnung der Einhakbucht 60 hin versetzt. Der Klemmflanke 64 ist eine Anschlagfläche 68 an der Bodenschiene 20 zugeordnet. Bei der Monatage kann die Längsführung dann, wenn ihr hinterer Bereich angehoben ist, ungehindert mit dem Bolzen 62 in die Einhakbucht 60 eingeführt werden. Sobald jedoch, mit dem Bolzen 62 als Achse, die Längsführung nach hinten heruntergedrückt wird, um das Klemmgesperre 24 in Einraststellung zu bringen, verklemmt sich die Klemmflanke 64 gegen die Anschlagsfläche 68, wodurch ein solider Halt der Einhakeinrichtung 54 gewährleistet ist.

Wie aus der Figur ersichtlich befindet sich die Einhakeinrichtung in einem U-förmigen (in Längsrichtung gesehen) Gehäuse 70, dessen Außenwände durch den Bolzen 62 verbunden sind, dessen obere Schmalfläche innseitig die Anschlagsfläche 68 bildet und das von unten durch die entsprechend breiter gewählte Öffnung 36 gesteckt ist. Übergreifende Endbereiche 72 liegen an der Außenseite der Bodenschiene 20 an und fixieren so das Gehäuse 70, das mit der Bodenschiene 20 verbunden ist.

Die Einhakbucht 60 ist auf ihrer Länge dem Durchmesser des Bolzens 62 überall angepaßt, so daß die Position des Bolzens 62 innerhalb der Einhakbucht 60 beliebig ist. Hierdurch werden, wie erwähnt, Toleranzen zwischen dem Abstand der beiden Spannelemente 28, 58 ausgeglichen.

Beide Befestigungsvorrichtungen, das Klemmgesperre 24 und die Einhakeinrichtung 54 sind aus Stanzteilen gefertigt und lassen sich sehr schmal aufbauen (in Schienenlängsrichtung gesehen), sie nehmen somit wenig Platz weg.

In den Klemmbacken 46 können, wie für die rechte Klemmbacke 46 der Figur gestrichelt eingezeichnet ist, Einschnitte 74 vorgesehen sein, in die ein Schraubenzieher oder ein ähnlicher Gegenstand eingesetzt werden kann. Durch Druck auf dieses Hilfswerkzeug wird die Klemmbacke 46 entriegelt.

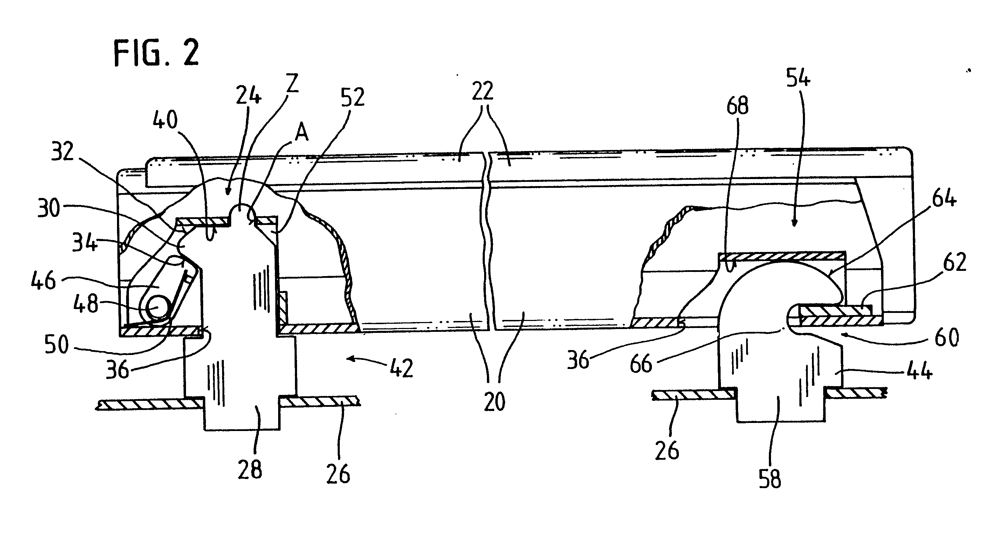

Im Ausführungsbeispiel nach Fig.2 befindet sich im Gegensatz zum bisher besprochenen Ausführungsbeispiel die Einhakeinrichtung 54 im hinteren Endbereich der Bodenschiene 20. Dieser Bereich wird bei unfallbedingten Beschleunigungen stärker belastet, Versuche haben gezeigt, daß eine derartige Belastung besser und günstiger durch die Einhakeinrichtung 54 als durch das Klemmgesperre 24 übertragen wird.

Als starrer Körper, der in die Einhakbucht 60 eingreift, ist nicht ein separater Bolzen vorgesehen, vielmehr wird der untere, entsprechend verstärkte Flansch der Bodenschiene 20 direkt umgriffen. Demgemäß erweitert sich die Einhakbucht 60 keilförmig nach außen, ihre obere Kante, an der die Klemmkraft angreift, ist in einem sehr geringen Winkel nach vorn geöffnet, damit sichergestellt ist, daß die vordere Kante der Öffnung 36 anliegt.

Das Klemmgesperre 24 hat lediglich einen Klemmkörper 46, ansonsten ist aber seine Funktion völlig analog dem Klemmgesperre 24 nach Fig. 1. Dagegen springt an der Anschlagfläche 38 des Klemmgesperres 24 nach Fig. 2 ein Zentriervorsprung Z nach vorn vor. Er durchgreift passgenau eine Zentrierausnehmung A in der Anschlagfläche 40 der Bodenschiene 20. Demgemäß wird im Ausführungsbeispiel nach Fig. 2 die Positionierung zwischen Bodenschiene 20 und Spannelement 28 nicht im Bereich der Öffnung 36, sondern über den zapfenartigen Zentriervorsprung Z und die ihm exakt angepasste Zentrierausnehmung A erreicht. Der Klemmkörper 46 ist durch eine Schenkelfeder 50 in Klemmrichtung beaufschlagt, diese kann auch durch eine Blattfeder oder durch eine geeignete Feder ersetzt werden. Die Klemmkörper können auch beliebige andere Ausformungen haben, beispielsweise als Exzenter oder eine zum gezeigten Ausführungsbeispiel um 90 Grad quergestellte Ausführung haben, wobei sie mit einem V-förmigen Einschnitt an der Klemmflanke 34 anliegen.

Der bzw. die Klemmkörper 46 können in ihrer in den Fig. gezeigten Klemmstellung durch geeignete, an sich bekannte Mittel formschlüssig gehalten werden. Beispielsweise kann seitlich ein Sicherungsstift eingeschoben werden.

**Patentansprüche**

1. Befestigungsvorrichtung für eine Bodenschiene (20) einer Längsführung eines Fahrzeugsitzes an einer Bodengruppe (26) eines Fahrzeuges, die eine Öffnung (36) in der Bodenschiene (20) aufweist, durch welche ein mit der Bodengruppe (26) verbundenes, starres Spannelement (28) greift, das die Bodenschiene (20) fest gegen die Bodengruppe (26) zieht, dadurch gekennzeichnet, daß im Durchsteckbereich des Spannelements (28) an der Bodenschiene mindestens ein gegen eine elastische Rückstellkraft verschwenkbarer Klemmkörper (46) angeordnet ist und daß das Spannelement (28) mit diesem Klemmkörper (46) eine Klemmsperre (24) bildet, wozu das Spannelement (28) eine quer zu seiner Durchsteckrichtung vorspringende Nase (30) aufweist, die eine vordere, beim Einstecken des Spannelements (28) in die Öffnung (36) der Bodenschiene (20) den Klemmkörper (46) seitlich wegdrückende Abweisflanke (32) und eine dieser gegenüber zurückspringende Klemmflanke (34) aufweist, an der der Klemmkörper (46) bei befestigter Längsführung unter Einhaltung eines sehr spitzen Winkels (Reibungswinkel) anliegt.

2. Befestigungsvorrichtung nach Anspruch 1, dadurch gekennzeichnet, daß pro Spannelement (28) eine Klemmkörper (46) vorgesehen ist und daß das Spannelement (28) an der vom Klemmkörper (46) abgewandten Fläche eine im wesentlichen quer zur Einsteckrichtung verlaufende Anschlagfläche (38) aufweist, der eine gleichgerichtete Anschlagfläche (40) der Bodenschiene (20) zugeordnet ist.

3. Befestigungsvorrichtung nach Anspruch 1 oder 2, dadurch gekennzeichnet, daß der Klemmkörper als Klemmbacke (46) ausgebildet ist, die um eine an der Bodenschiene (20) gehaltene Achse (48) verschwenkbar und durch eine Feder (50) in Klemmrichtung beaufschlagt ist.

4. Befestigungvorrichtung nach einem der Ansprüche 1 bis 3, dadurch gekennzeichnet, daß an der Anschlagfläche (38) ein Zentriervorsprung (Z) nach vorn vorspringt, dem eine Zentrierausnehmung (A) in der Anschlagfläche (40) der Bodenschiene (20) zugeordnet ist.

5. Befestigungsvorrichtung nach einem der Ansprüche 1 bis 4, dadurch gekennzeichnet, daß das Spannelement (28) sich in seinem bei befestigter Längsführung an der Öffnung (36) der Bodenschiene (20) anliegenden Bereich nach hinten (zur Bodengruppe 26 hin) keilförmig erweitert.

6. Befestigungsvorrichtung nach einem der Ansprüche 1 bis 5, dadurch gekennzeichnet, daß nur an einem Endbereich der Bodenschiene (20), vorzugsweise dem vorderen Endbereich, eine Klemmsperre (24) vorgesehen ist und daß die Befestigungsvorrichtung des anderen Endbereichs als Einhakeneinrichtung (54) ausgebildet ist, bei der das Spannelement (58) eine in der Verschieberichtung der Längsführung offene Einhakbucht (60) aufweist und an der Bodenschiene (20) ein starrer Körper (Bolzen 62) befestigt ist den die Einhakbucht (60) bei befestigter Längsführung umgreift.

7. Befestigungsvorrichtung nach Anspruch 6, dadurch gekennzeichnet, daß das Spannelement (zweites Spannelement 58) der Einhakeinrichtung (54) eine Klemmflanke (64) aufweist, der eine Anschlagfläche (68) der Bodenschiene (20) zugeordnet ist, wobei das Spannelement (58) beim Befestigen der Längsführung an der Bodengruppe (26) zwischen dem starren Körper (Bolzen 62) und der Anschlagfläche (68) eingespannt wird, wenn die zunächst schräg gehaltene, mit ihrem starren Körper (Bolzen 62) in die Einhakbucht (60) eingeführte Längsführung an ihrem anderen, das Klemmsperre (24) aufweisenden Endbereich nach unten gedrückt wird.

8. Befestigungsvorrichtung nach einem der Ansprüche 1 bis 7, dadurch gekennzeichnet, daß die Spannelemente (28, 58) und die Klemmbakken (46) Stanzteile sind und parallel zur Verschieberichtung der Längsführung angeordnet sind.

9. Befestigungsvorrichtung nach einem der Ansprüche 1 bis 8, dadurch gekennzeichnet, daß die Spannelemente (28, 58) zwischen der Bodengruppe (26) und der Aussenseite der Bodenschiene (20) einen stegartigen Bereich (44) haben, der zur Korrektur von Abmessungsabweichungen der Bodengruppe (26) deformierbar ist.

10. Befestigungsvorrichtung nach einem der Ansprüche 1 bis 9, dadurch gekennzeichnet, daß die Klemmbacken (46) Einschnitte (74) aufweisen, in die ein Entrieglungswerkzeug eingesetzt werden kann, oder daß in der Bodenschiene (20) seitlich einer Klemmbacke (46) eine Öffnung im Seitenschenkel vorgesehen ist, durch die ein Entriegelungswerkzeug durchgeführt werden kann.

## Revendications

1. Dispositif de fixation du rail de plancher (20) d'un guide longitudinal d'un siège de véhicule sur une structure de plancher (26), qui comporte dans le rail de plancher une ouverture (36) au travers de laquelle s'accroche un élément rigide de serrage (28), relié à la structure de plancher (26) et qui applique étroitement le rail de plancher (20) contre la structure de plancher (26), caractérisé en ce qu'il est prévu dans la zone d'engagement de l'élément de serrage (28) sur le rail de plancher au moins un corps de blocage (46) pouvant pivoter en opposition à une force élastique de rappel et en ce que l'élément de serrage (28) constitue avec ce corps de blocage (46) un verrou de blocage (24) et, à cet effet, l'élément de serrage (28) comporte un ergot (30) faisant saillie perpendiculairement à sa direction d'engagement et qui comporte un flanc avant d'écartement (32), refoulant latéralement le corps de blocage (46) lors de l'engagement de l'élément de serrage (28) dans l'ouverture (36) du rail de plancher (20), ainsi qu'un flanc de blocage (34), ramenant élastiquement en arrière ledit flanc d'écartement et contre lequel s'applique le corps de blocage (46), lorsque le guide longitudinal est fixé, en maintenant un angle très aigu (angle de frottement).

2. Dispositif de fixation selon la revendication 1, caractérisé en ce qu'il est prévu, par élément de serrage (28), un corps de blocage (46) et en ce que l'élément de senage (28) comporte, sur la surface opposée au corps de blocage (46), une surface de butée (38) orientée sensiblement perpendiculairement à la direction d'engagement et à laquelle est associée une surface de butée (40), orientée dans la même direction, du rail de plancher (20).

3. Dispositif de fixation selon une des revendications 1 ou 2, caractérisé en ce que le corps de blocage est agencé comme une mâchoire de blocage (46), qui peut pivoter autour d'un axe (48) maintenu sur le rail de plancher (20) et qui est sollicitée dans la direction de blocage par un ressort (50).

4. Dispositif de fixation selon une des revendications 1 à 3, caractérisé en ce que sur la surface de butée (38) fait saillie vers l'avant une saillie de centrage (Z) à laquelle est associé un évidement de centrage (A) ménagé dans la surface de butée (40) du rail de plancher (20).

5. Dispositif de fixation selon une des revendications 1 à 4, caractérisé en ce que l'élément de serrage (28) s'élargit en forme de coin vers l'arrière ( en direction de la structure de plancher 26), dans sa zone où il s'applique contre l'ouverture (36) du rail de plancher (20) lorsque le guide longitudinal est fixé en place.

6. Dispositif de fixation selon une des revendications 1 à 5, caractérisé en ce qu'il est prévu un verrou de blocage (24) seulement dans une zone d'extrémité du rail de plancher (20), de préférence la zone d'extrémité avant, et en ce que le dispositif de fixation de l'autre zone d'extrémité est agencé sous la forme d'un dispositif d'accrochage (54), dans lequel l'élément de serrage (58) comporte une échancrure d'accrochage (60), ouverte dans la direction de translation du guide longitudinal tandis que sur le rail de plancher (20) est fixé un corps rigide (boulon 62) qui est entouré par l'échancrure d'accrochage (60) lorsque le guide longitudinal est fixé en place.

7. Dispositif de fixation selon la revendication 6, caractérisé en ce que l'élément de serrage (second élément de serrage 58) du dispositif de serrage (54) comporte un flanc de blocage (64), auquel est associée une surface de butée (68) du rail de plancher (20), l'élément de serrage (58) étant maintenu, lors de la fixation du guide longitudinal sur la structure de plancher (26), entre le corps rigide (boulon 62) et la surface de butée (68) quand le guide longitudinal, maintenu initialement en oblique et engagé par son corps rigide (boulon 62) dans l'échancrure d'accrochage (60), est poussé vers le bas dans son autre zone d'extrémité comportant le verrou de blocage (24).

8. Dispositif de fixation selon une des revendications 1 à 7, caractérisé en ce que les éléments de serrage (28, 58) et les mâchoires de blocage (46) sont des pièces poinçonnées et sont disposés parallèlement à la direction de translation du guide longitudinal.

9. Dispositif de fixation selon une des revendications 1 à 8, caractérisé en ce que les éléments de serrage (28, 58) comportent, entre la structure de plancher (26) et le côté extérieur du rail de plancher (20), une zone en forme d'âme (44), qui est déformable en vue d'une correction des écarts dimensionnels de la structure de plancher (26).

10. Dispositif de fixation selon une des revendications 1 à 9, caractérisé en ce que les mâchoires de blocage (46) comportent des encoches (74) dans lesquelles peut être engagé un outil de déverrouillage, ou bien en ce qu'il est prévu dans le rail de plancher (20), sur le côté d'une mâchoire de blocage (46), une ouverture ménagée dans une branche latérale et au travers de laquelle peut être engagé un outil de déverrouillage.

**Claims**

1. A device for fixing a bottom rail (20) of a longitudinal guide of a vehicle seat to a vehicle underbody (26), which device has an opening (36) in the bottom rail (20) into which a rigid clamping part (28) connected to the underbody (26) engages and pulls the bottom rail (20) securely against the underbody (26), characterized in that at least one gripping member (46) which can be pivoted against an elastic resetting force is arranged in the region on the bottom rail where the clamping part (28) is inserted, and in that the clamping part (28) forms a locking mecnanism (24) together with this gripping member (46), for which purpose the clamping part (28) has a lug (30) projecting transversely to the direction of insertion of the said clamping part and having a front deflecting side (32) which pushes the gripping member (46) away laterally when the camping part (28) is inserted into the opening (36) of the bottom rail (20), and a clamping side (34), opposite the said deflecting side, which springs back and against which the gripping member (46) bears when the longitudinal guide is secured, while still forming a very acute angle (angle of friction).

2. A fixing device according to Claim 1, characterized in that a gripping member (46) is provided for each clamping part (28) and in that the clamping part (28) has on the surface remote from the gripping member (46) a contact surface (38) which lies substantially transversely to the direction of insertion and with which a similarly directed contact surface (40) on the bottom rail (20) is associated.

3. A fixing device according to Claim 1 or 2, characterized in that the gripping member is designed as a gripping jaw (46) which can be pivoted about a pin (48) retained on the bottom rail (20) and is biased by a spring (50) in the clamping direction.

4. A fixing device according to one of Claims 1 to 3, characterized in that a centring projection (Z) protrudes towards the front on the contact surface (38) and has, associated with it, a centring recess (A) in the contact surface (40) of the bottom rail (20).

5. A fixing device according to one of Claims 1 to 4, characterized in that the clamping part (28) widens out in a wedge shape towards the rear (towards the underbody 26) in its region which makes contact with the opening (36) in the bottom rail (20) when the longitudinal guide is secured.

6. A fixing device according to one of Claims 1 to 5, characterized in that a locking mechanism (24) is provided only in one end region of the bottom rail (20), preferably the front end region, and in that the fixing device of the other end region is designed as a hooking device (54) in which the clamping part (58) has an engaging recess (60) open in the direction of displacement of the longitudinal guide and a rigid member (bolt 62) is secured to the bottom rail (20), the engaging recess (60) enclosing the said rigid member when the longitudinal guide is secured.

7. A fixing device according to Claim 6, characterized in that the clamping part (second clamping part 58) of the hooking device (54) has a clamping flank (64) with which a contact surface (68) on the bottom rail (20) is associated, the clamping part (58) being clamped between the rigid member (bolt 62) and the contact surface (68) when the longitudinal guide is secured to the underbody (26), if the initially inclined longitudinal guide introduced into the engaging recess (60) together with its rigid member (bolt 62) is pressed downwards at its other end which has the locking mechanism (24).

8. A fixing device according to one of Claims 1 to 7, characterized in that the clamping parts (28, 58) and the gripping jaws (46) are punched parts and are arranged parallel to the direction of displacement of the longitudinal guide.

9. A fixing device according to one of Claims 1 to 8, characterized in that the clamping parts (28, 58) between the underbody (26) and the outer side of the bottom rail (20) have a web-like region (44) which can be deformed in order to rectify deviations in the dimensions of the underbody (26).

10. A fixing device according to one of Claims 1 to 9, characterized in that the gripping jaws (46) have notches (74) into which an unlocking tool can be inserted, or in that, in the bottom rail (20) on one side of a gripping jaw (46), an opening is provided in the side flange, through which an unlocking tool can be introduced.

FIG. 1

0 112 565

FIG. 2

0 112 565